# EUROPEAN PATENT APPLICATION

(11) **EP 4 604 453 A1**
(43) Date of publication of application: **20.08.2025**
(21) Application number: 24305266.9
(22) Date of filing: 15.02.2024
(51) Int. Cl.: H04L 9/40, H04W 12/041, H04W 12/043

(54) **A METHOD FOR PROTECTING IN CONFIDENTIALITY OR INTEGRITY OR BOTH A DATA COMMUNICATION CHANNEL OF A SLICE**

(71) Applicant: THALES DIS FRANCE SAS, 92190 Meudon (FR)
(72) Inventor: DANY, Vincent, 13400 AUBAGNE (FR); PAULIAC, Mireille, 13470 CARNOUX EN PROVENCE (FR); PHAN, Ly-Thanh, 92350 LE PLESSIS-ROBINSON (FR)
(74) Representative: Scheer, Luc

(57) **Abstract**

The invention proposes a method for protecting in confidentiality or integrity or both a data communication channel of a slice established between:
- a user equipment 100 comprising a secure element 110 cooperating with a mobile equipment 111 and,
- a VPN Virtual Private network server 117 cooperating with an Authentication, Authorization and Accounting Server, AAA-S 104,
the method comprising:
- after an EAP Authentication procedure slice EAP completes positively between the mobile equipment 111 and the AAA-S 104 according to ETSI standard TS 133 501 V16.3.0, generating at the secure element 110 and at the AAA-S 104 at least one secret key, identical at the secure element 110 and the AAA-S 104;
- protecting in confidentiality or integrity or both by the at least one secret key the messages exchanged between the user equipment 100 cooperating with a VPN client 112 and the VPN server 117 by using VPNs using the at least one secret key.

## Description

The present invention concerns telecommunications and in particular 5G network slicing.

5G network slicing is a network architecture that provides a way to divide a network to provide independent logical networks over physical network resources and functionality. This can help operators (MNOs) to provide differentiated services and more quickly deploy new cases.

An operator can use network slicing to logically allocate physical resources across one or more slices, where each slice may have a different Quality of Service (QoS) and other performance characteristics, as well as configurations and policies, to meet a variety of use cases and possible Service Level Agreements (SLAs).

For example, a slice supporting mobile broadband users requires high data rates and traffic volumes, a slice supporting Internet of Things devices may optimize high-density devices and power consumption, and a slice supporting autonomous driving may provide high-reliability and low-latency communications.

Today, 3GPP only defined slice authentication (see for example 5G; 5G System; Network Slice-Specific Authentication and Authorization (NSSAA) services; Stage 3 (3GPP TS 29.526 version 16.2.0 Release 16).

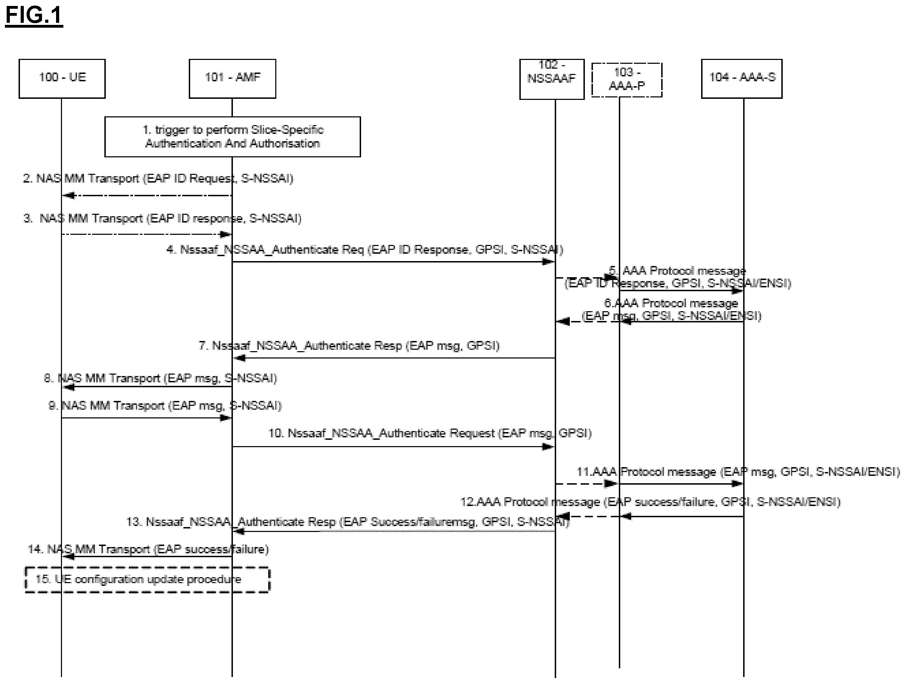

Figure 1 represents an extract of the ETSI standard TS 133 501 V16.3.0 (2020-08) entitled "5G; Security architecture and procedures for 5G System (3GPP TS 33.501 version 16.3.0 Release 16)" that represents in figure 16.3-1 the "Network Slice-Specific Authentication and Authorization procedure".

In this figure, five entities are represented: a user equipment (UE) 100, constituted by a secure element like a UICC cooperating with a mobile equipment (ME), an AMF (Access and Mobility Management Function) 101, a NSSAAF (Network Slice Specific Authentication and Authorization Function) 102, an AAA-P (Authentication, Authorization and Accounting Proxy) 103 and an AAA-S (Authentication, Authorization and Accounting Server) 104.

In this figure, the following steps are performed (according to the above-mentioned standard):
1. For S-NSSAls that are requiring Network Slice-Specific Authentication and Authorization, based on change of subscription information, or triggered by the AAA-S 104, the AMF 101 may trigger the start of the Network Slice Specific Authentication and Authorization procedure. If Network Slice Specific Authentication and Authorization is triggered as a result of Registration procedure, the AMF 101 may determine, based on UE 100 Context in the AMF 101, that for some or all S-NSSAI(s) subject to Network Slice Specific Authentication and Authorization, the UE 100 has already been authenticated following a Registration procedure on a first access. Depending on Network Slice Specific Authentication and Authorization result (e.g. success/failure) from the previous Registration, the AMF 101 may decide, based on Network policies, to skip Network Slice Specific Authentication and Authorization for these S-NSSAIs during the Registration on a second access. If the Network Slice Specific Authentication and Authorization procedure corresponds to a re-authentication and re-authorization procedure triggered as a result of AAA Server-triggered UE 100 re-authentication and reauthorization for one or more S-NSSAls, as described in clause 4.2.9.2 of TS 23.502, or triggered by the AMF 101 based on operator policy or a subscription change and if S-NSSAIs that are requiring Network Slice-Specific Authentication and Authorization are included in the Allowed NSSAI for each Access Type, the AMF 101 selects an Access Type to be used to perform the Network Slice Specific Authentication and Authorization procedure based on network policies.
2. The AMF 101 may request the UE 100 User ID for EAP authentication (EAP ID) for the S-NSSAI in a NAS MM Transport message including the S-NSSAI.
3. The UE 100 provides the EAP ID for the S-NSSAI alongside the S-NSSAI in an NAS MM transport message towards the AMF 101.
4. The AMF 101 sends the EAP ID to the NSSAAF 102 which provides interface with the AAA, in a NSSAAF 102_NSSAA_Authenticate Request (EAP ID Response, GPSI, S-NSSAI).
5. If the AAA-P 103 is present (e.g. because the AAA-S 104 belongs to a third party and the operator deploys a proxy towards third parties), the NSSAAF 102 forwards the EAP ID Response message to the AAA-P 103, otherwise the *ETSI* 3GPP TS 33.501 version 16.3.0 Release 16 189 ETSI TS 133 501 V16.3.0 (2020-08) NSSAAF 102 forwards the message directly to the AAA-S 104. NSSAAF 102 routes to the AAA-S 104 based on the S-NSSAI. The NSSAAF 102/AAA-P 103 forwards the EAP Identity message to the AAA-S 104 together with S-NSSAI and GPSI. The AAA-S 104 stores the GPSI to create an association with the EAP ID in the EAP ID response message so the AAA-S 104 can later use it to revoke authorization or to trigger reauthentication. The AAA-S 104 uses the EAP-ID and S-NSSAI to identify for which UE 100 and slice authorization is requested.
6 -11. EAP-messages are exchanged with the UE 100. One or more than one iteration of these steps may occur.
12. EAP authentication completes. An EAP-Success/Failure message is delivered to the NSSAAF 102/AAA-P 103 along with GPSI and S-NSSAI.
13. The NSSAAF 102 sends the NSSAAF 102_NSSAA_Authenticate Response (EAP-Success/Failure, S-NSSAI, GPSI) to the AMF 101.
14. The AMF 101 transmits a NAS MM Transport message (EAP-Success/Failure) to the UE 100.
15. Based on the result of Slice specific authentication (EAP-Success/Failure), if a new Allowed NSSAI or new Rejected NSSAIs needs to be delivered to the UE 100, or if the AMF 101 re-allocation is required, the AMF 101 initiates the UE 100 Configuration Update procedure, for each Access Type, as described in clause 4.2.4.2 of TS 23.502.

However, this standardized solution does not provide any security, especially for private networks use cases:
- For enterprises, security and privacy are two mandatory points for selecting a private network;
- In the aircraft domain for example, LAS (Landing Assist Sensor) secure communications have to be deployed for ensuring privacy and security of the communications (commands) between the cockpit and the control tower;
- In the military domain, several tactical bubbles (e.g. lOPS - Isolated E-UTRAN Operation for Public Safety) use their own security system within a bubble but cannot communicate outside of this bubble (e.g. to the headquarter or another bubble). In case of compromission of the bubble, previous communication to the headquarter or to another bubble could be decrypted (stored and decrypted later). To avoid this risk, the communications external to the bubble must be protected with a key not known by the bubble Core Network (CN).

It is therefore desired to provide a solution for providing end-to-end protection (encryption, or integrity or both) of the data exchanged between a user equipment (UE) comprising a secure element, like a USIM (Universal SIM), a UICC (Universal Integrated Circuit Card), an eUICC (embedded UICC) or an iUICC (integrated UICC) for example and an end-point.

This objective is reached thanks to a method according to the appended claims.

The invention will be better understood by reading the description below of a preferred embodiment of the invention, given as a non-exhaustive example, in view of the figures that represent:
- Figure 1, an extract of the ETSI standard TS 133 501 V16.3.0 (2020-08) entitled "5G; Security architecture and procedures for 5G System (3GPP TS 33.501 version 16.3.0 Release 16)" represents in figure 16.3-1 the "Network Slice-Specific Authentication and Authorization procedure";
- Figure 2, a simplified flowchart of the method according to the invention, based on figure 1;
- Figure 3, a flowchart of the method according to the invention, for generating a shared secret between the ME and the AAA-S of figure 2;
- Figure 4, a flowchart of the method according to the invention, representing an example for configuring security parameters in a mobile equipment from an UDM.

Figure 1 has been described in regard of the state of the art.

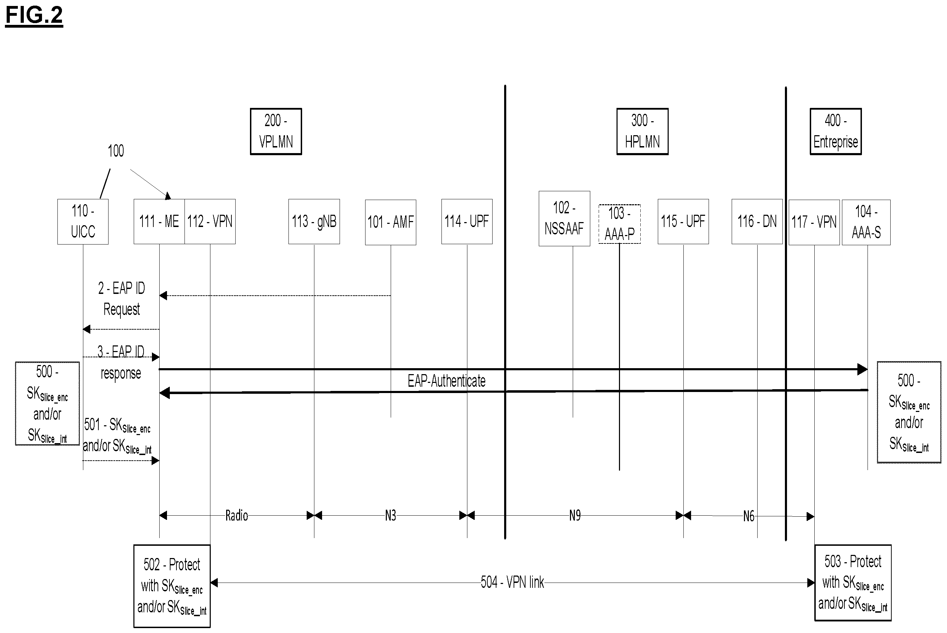

Figure 2 represents a simplified flowchart of the method according to the invention, based on figure 1.

In this figure, the same entities than those of figure 1 are represented (100 to 104).

Steps 2 and 3 are identical to steps 2 and 3 of figure 1 (the AMF 101 requests the UE 100 an User ID for EAP authentication for the S-NSSAI and the UE 100 provides the EAP ID for the S-NSSAI alongside the S-NSSAI towards the AMF 101, through the ME 111).

In this figure, a complete system is represented, by assuming that the UE 100 is not directly connected to his HPLMN 300, but through a VPLMN 200. The configuration here is that the UE 100 wants to connect to a private network managed by an enterprise 400 through a VPLMN 200.

The entities represented in this figure are:
- In the VPLMN 200:
   - a UICC 110 cooperating with a ME 111, both constituting the UE 100 of figure 1;
   - a VPN 112 connected or integrated in the ME 111;
   - a gNB 113;
   - the AMF 101 of figure 1;
   - an UPF 114;
- In the HPLMN 300:
   - the NSSAAF 102 of figure 1;
   - the AAA-P 103 of figure 1;
   - an UPF 115;
   - a DN 116;
- In the enterprise 400:
   - a VPN 117 connected to the AAA-S 104 of figure 1.

As it will be detailed below, the invention consists in adding VPN servers 112 and 117 between the UE 100 and the AAA-S 104 in order to secure all the communications between them.

The method of the invention provides a method for protecting in confidentiality or integrity (or both) a data communication channel of a slice established between:
- a user equipment 100 comprising a secure element 110 cooperating with a mobile equipment 111 and,
- a VPN Virtual Private network server 117 cooperating with an Authentication,
Authorization and Accounting Server, AAA-S 104,
the method comprising:
- after an EAP Authentication procedure slice EAP completes positively between the mobile equipment 111 and the AAA-S 104 according to ETSI standard TS 133 501 V16.3.0, generating at the secure element 110 and at the AAA-S 104 at least one secret key, identical at the secure element 110 and the AAA-S 104;
- protecting in confidentiality or integrity or both by at least one secret key the messages exchanged between the user equipment 100 cooperating with a VPN client 112 and the VPN server 117 by using VPNs using the at least one secret key.

The invention particularly concerns the protection of a User Plane (U-Plane) that is the process of sending and receiving user data, which are the main signals for communication.

The data communication channel is preferably in a user plane.

The secret keys can be generated or known in advance at step 500, after steps 2 and 3 previously described, at the level of the UICC 110 and the AAA-S 104.

The secret keys are, at step 501, transmitted from the UICC 110 to the ME 111.

Then, standardized exchanges are performed between the ME 111 and the VPN 117:
- a radio interface is established between the ME 111 and the gNB 113,
- a N3 5G interface is established between the gNB 113 and the UPF 114,
- a N9 5G interface is established between the UPF 114 and the UPF 115,
- a N6 5G interface is established between the UPF 115 and the VPN 117.

The 5G N3 interface performs the role of conveying user data from the RAN to the User Plane Function, making it possible to create both low- and high-latency services. It replaces the S1-U interface from the 4G EPC and is key for supporting the new CUPS architecture, with distributed user data processing. Testing and validation of these interfaces is essential, but a challenge. The N9 interface is a special feature of the 5G Core UPF is that two UPFs can be deployed in series and connected via an interface referred to as N9.

For the N6 interface, in 4G networks, the SGi interface (defined by the 3GPP as the interface between the EPC and the Public IP network. Importantly, traffic through the interface can be identified by user IP, making user and service differentiation a reality. As such, the SGi interface can be perceived as a service gateway, and is a key enabler for new services, particularly when combined with functions such as deep packet inspection and policy-based service selection). The N6 interface plays the same role in the 5G network, providing connectivity between the UPF and any other external (or internal) networks or service platforms, such as the Internet, the public cloud or private clouds.

Once this protocol has been established, the invention proposes to protect (steps 502 and 503) all the data exchanged between the ME 111 and the VPN server 117, through a secured VPN link 504.

The master key generation and the session keys derivations can be performed either in the ME 111 or in the UICC 110.

The ME 111 protects the data to be communicated to the AAA-S 104 with the secret keys SK_{Slice_enc} for confidentiality and/or SK_{Slice_int} for integrity, and the AAA-S 104 protects the data to be communicated to the ME 111 with the same secret keys SK_{Slice_enc} and/or SK_{Slice_int}. Confidentiality and integrity of communication is therefore ensured, in the scope of a user plane communication channel of a slice established between these two entities.

This solution was based on a at least single shared secret key (SK_{Slice_enc} and/or SK_{Slice_int}).

For going forward, the invention also proposes to generate, at the secure element 110 (or at the ME 111) and at the AAA-S 104 same secret keys generated by deriving session keys (SK_{Slice_enc} key and/or SK_{Slice_int}) derivated from a master key MK and a list of parameters that could be one or several of:
- a label e.g. "Slice-Enc";
- a session Id;
- an EAP-ID;
- a key type (e.g. encryption, integrity);
- a key size;
- an algorithm type.

The master key MK is the MSK or the EMSK as defined in the RFC 3748 of the EAP (Extensible Authentication Protocol).

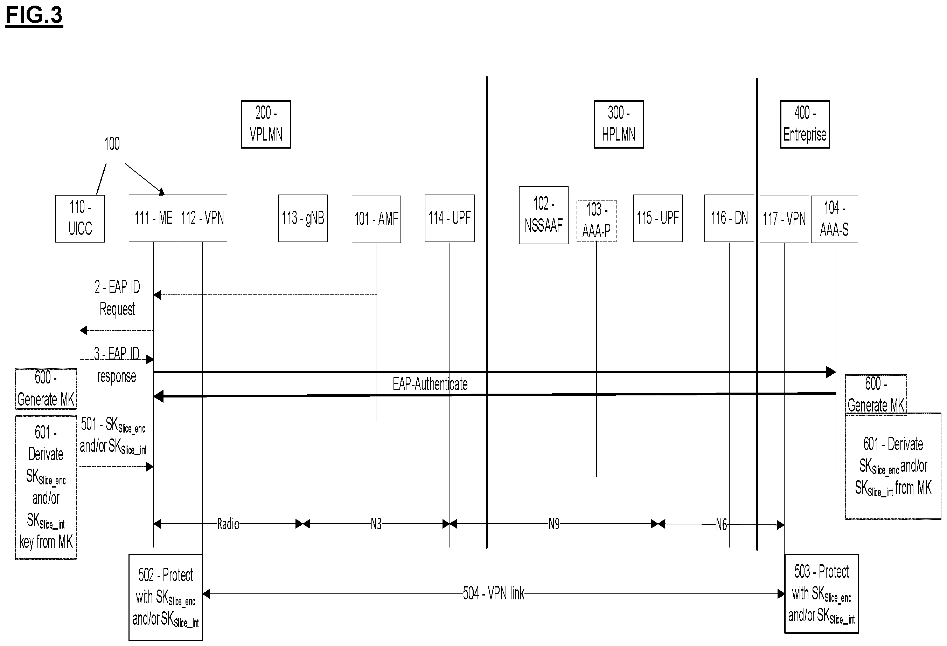

This is disclosed in figure 3 where:
- at step 600, a master key is generated at the AAA-S 104 and at the secure element 110;
- at step 601, the AAA-S 104 and the secure element 110 derive the secret keys SK_{Slice_enc} and/or SK_{Slice_int};
- the step 501 is identical to step 501 of figure 2;
- at step 502 to 504, a VPN link is established between the VPNs 112 and 117.

Alternatively, a master session key can be derived from the master key MK, then the SK_{Slice_enc} and SK_{Slice_int} are derived from this master session key.

The VPNs 112 and 117 can be native VPNs. This has the advantage that the encryption of the user plane communication channel of a slice is "plug and play": There is no need to install an over-the-top application.

Also, the credentials can be securely secured outside of the serving network and user credentials can be managed remotely by the credential manager.

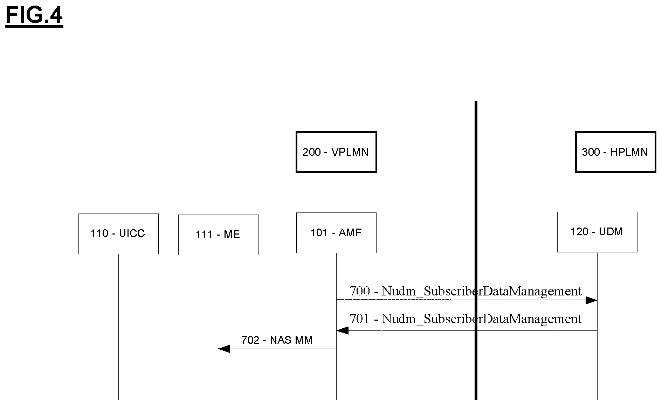

Figure 4 represents an example for configuring the security parameters in the ME from the UDM.

The AMF is in the serving network (VPLMN or HPLMN).

At step 700, the AMF sends a request to the UDM (Unified Data Management) according to TS 29.503, TS 23.501 and TS 23.502 to obtain the subscriber data information (in the command Nudm_SubscriberDataManagement).

As said before, these parameters can be one of several of:
- a label e.g. "Slice-Enc" ;
- a session Id;
- an EAP-ID;
- a key type (e.g. encryption, integrity);
- a key size;
- an algorithm type.

These parameters can be either pre-configured in the UE (UICC 110 or ME 111) or configured by the UDM 120.

At step 701, the UDM answers with security parameters such as key lengths, parameters, encryption algorithms, security encryption required,... to be used by the ME for the protection of the data exchanged between the VPNs 112 and 117.

At step 702, these security parameters are transmitted to the ME 111 (UE Parameter Update) in a NAS MM message that sends them to the user equipment 100 or secure element 110.

## Claims

1. A method for protecting in confidentiality or integrity or both a data communication channel of a slice established between:
- a user equipment (100) comprising a secure element (110) cooperating with a mobile equipment (111) and,
- a VPN (Virtual Private network) server (117) cooperating with an Authentication,
Authorization and Accounting Server, AAA-S (104),
said method comprising:
- after an EAP Authentication procedure slice EAP completes positively between said mobile equipment (111) and said AAA-S (104) according to ETSI standard TS 133 501 V16.3.0, generating at said secure element (110) and at said AAA-S (104) at least one secret key, identical at said secure element (110) and said AAA-S (104);
- protecting in confidentiality or integrity or both by said at least one secret key the messages exchanged between said user equipment (100) cooperating with a VPN client (112) and said VPN server (117) by using VPNs using said at least one secret key.

2. A method according to claim 1, wherein said secret key is generated for confidentiality by deriving a session key (SK_{Slice_enc}) derivated from a master key (MK).

3. A method according to claim 1, wherein said secret key is generated for integrity by deriving a session key (SK_{Slice_int}) derivated from a master key (MK).

4. A method according to any of the claims 1 to 3, wherein said data communication channel is in a user plane.

5. A method according to any of the claims 1 to 4, wherein parameters allowing to establish said protection in confidentiality or integrity of both are either pre-configured in said user equipment (100) or said secure element (110) or configured by an UDM (120) that sends said parameters to said user equipment (100) or said secure element (110).
